# EUROPEAN PATENT SPECIFICATION

(11) **EP 0 406 179 B1**
(45) Date of publication and mention of the grant of the patent: **12.05.1993**
(21) Application number: 90830269.8
(22) Date of filing: 14.06.1990
(51) Int. Cl.: A63C 11/02

(54) **Skicarrier**
Ski-Transportgerät
Dispositif pour transporter une paire de skis

(30) Priority: 27.06.1989 IT 3584689 U
(43) Date of publication of application: 02.01.1991
(73) Proprietor: Ogliotti, Claudio, 00123 Roma RM (IT); Santarini, Sergio, I-00135 Roma RM (IT)
(72) Inventor: Ogliotti, Claudio, 00123 Roma RM (IT); Santarini, Sergio, I-00135 Roma RM (IT)
(74) Representative: Di Cerbo, Mario

(56) References cited:
- CH-A- 418 201
- CH-A- 451 775
- CH-A- 581 487
- US-A- 3 626 553
- US-A- 3 701 436
- US-A- 4 666 184

## Description

The present invention refers to a carrier for making it easier the manual transport of skis.

As is known, in general a skier in order to reach on foot the ski-runs has to carry skis on his shoulders. This means, in particular as far as women and children are concerned, a great deal of discomfort and effort.

The object of the present invention is to provide a skicarrier capable of making it easier the manual transport of a pair of skis, either on the snow fields or on the ground, when not utilized, in order to prevent the above mentioned shoulder transport as well as the inconveniences related thereto.

CH-A-418 201 describes a skicarrier, for carrying skis when staying face-down, comprising a support with means capable of separately engaging in a removable manner both the terminal portions thereof. The above means are provided with adhesion layers for improving the holding of the skis to the support. The skicarrier is equipped with a pair of wheels for manually dragging in the ground.

The skicarrier, according to the present invention, for carrying skis when staying face-down, which comprises a support with means capable of separately engaging and holding in a removable manner both the terminal portions of a pair of skis, and rolling means pivoted on said support for manually dragging on the ground, is characterized in that the rolling means are a single roller, whose rotation axis is shorter than the width of the support base for sk-is and lies substantially in the same plane as the element on which it is pivoted, and in that the element on which the roller is pivoted is a flat element in form of an inverted U, the roller being pivoted between the two leg portions thereof.

According to a first preferred embodiment of the present invention, said support provided with means capable of separately engaging and holding in a removable manner both the terminal portions of a pair of skis comprises: a rectangle-shaped base; a rigid partition plate which extends upwards, integrally and perpendicularly to said base and along the whole medial longitudinal line thereof; and two spring-plates which extend integrally upwards from the corresponding longitudinal edges of said base.

According to a second preferred embodiment of the present invention, said support provided with means capable of separately engaging and holding in a removable manner both the terminal portions of a pair of skis comprises: a rectangle-shaped base; a rigid partition plate which extends upwards, integrally and perpendicularly to said base and along the whole medial longitudinal line thereof, each face of said rigid partition plate being provided with fastening belts; and two boards which extend integrally upwards from the corresponding longitudinal edges of said base.

The flat element in form of an inverted U according to the invention permits neither accumulation of snow onto the element itself nor blocking of the roller.

In point of fact, the overlying portion of the inverted U flat form element also acts as an effective scraper for the surface of the roller.

The present invention will be better disclosed hereinafter with reference to the examplified embodiments shown in the annexed figures in which:
figure 1 is a perspective view of a first embodiment of the skicarrier of the present invention; and
figure 2 is a perspective view of a second embodiment of the skicarrier of the present invention.

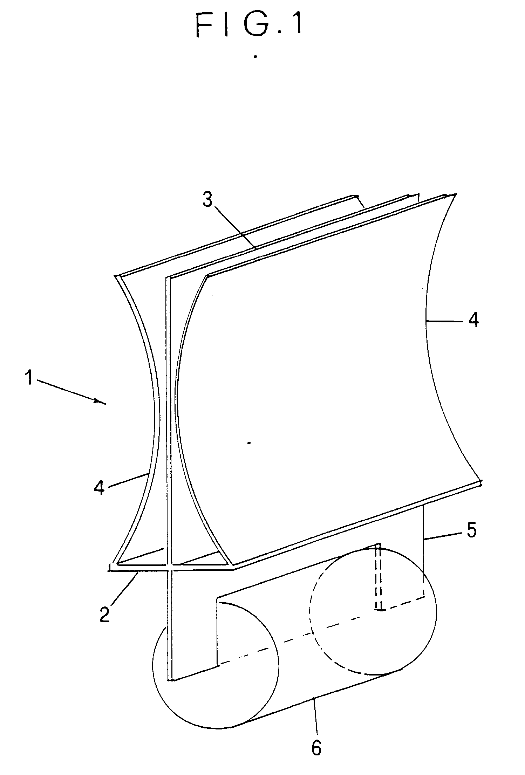

With reference to figure 1 is shown a first structural embodiment of the skicarrier of the invention, in which the numeral 1 indicates a support capable of engaging and holding the tails, or in general the extremities, of a pair of skis.

The support 1 comprises a rectangle-shaped base 2 having the upper face integral with the partition plate 3 which extends upwards perpendicularly to the base 2 and along the whole median longitudinal line thereof.

Each longitudinal edge of the base 2 is integral with the lower side of the spring-plates 4 which are so bended to be externally concave and extend upwards at the same height as the partition plate 3.

From the lower face of the base 2 and integrally thereto, extends downwards, substantially in the same plane as the partition plate 3, a flat element in form of an inverted U. Between the two leg-portions of said inverted U a rotatable roller 6 is pivoted.

The use of the above embodiment of the skicarrier as per the present invention is as follows. The skier causes the tails of skis, or in general the terminal portions thereof, to enter the respective compartments between the partition plate 3 and the spring plate 4. So, the above tails are strongly kept in said compartments. The skier can now easily drag skis, preferably grasping the tips thereof, thanks to the rolling of the roller 6 on the ground.

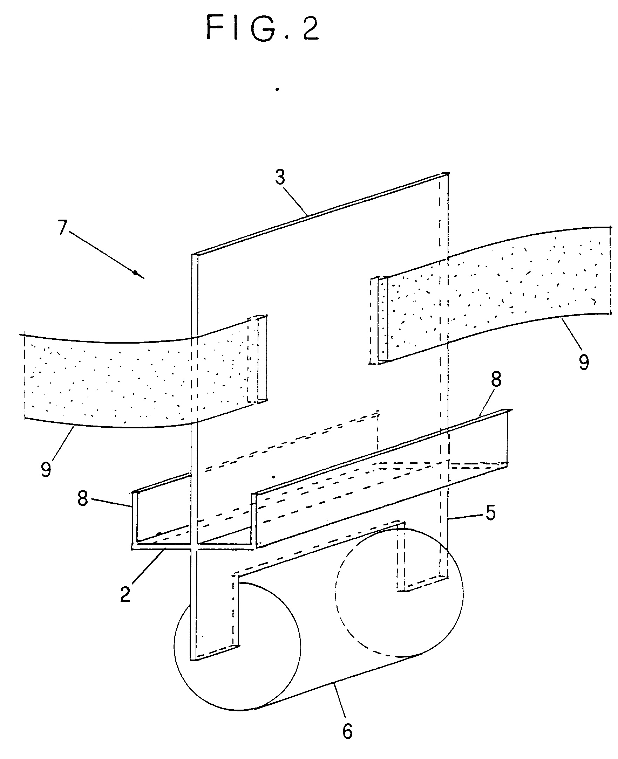

In figure 2 is shown a second structural embodiment of the skicarrier according to the invention. In this embodiment, the components already described in figure 1 are mentioned with the same numerals as used therein and without further illustration. In figure 2, the reference number 7 indicates a support for securing the tails of skis. Such a support, is provided, in the same way as the first embodiment, with a base 2, a rigid partition plate and an element in form of inverted U. Between the two leg-portions of the latter a rotatable roller 6 is pivoted. The support 7 of this embodiment differs from the support 1 of the first embodiment under the following aspects: the spring plates are replaced by boards 8 with an height smaller than that of the partition plate 2, each being integral with the corresponding longitudinal side of the base 2 and perpendicular thereto; and on each face of the partition plate 3 are secured in a spaced relationship the first extremities of two fastening belts which are only partially shown.

The use of the above second embodiment is as follows. The skis are set upright onto the base 2, each at a side of the partition plate 3, with the tails inserted between the partition plate and the corresponding board 3. Thereafter, the skis are secured to the skicarrier as embodied by means of the fastening belts 9.

It is evident that the manner of dragging skis by means of said second embodiment of the skicarrier of the invention is the same as in the first embodiment.

## Claims

1. A skicarrier for carrying skis when staying face-down, comprising a support with means capable of separately engaging and holding in a removable manner both the terminal portions of a pair of skis, and rolling means pivoted on said support for manually dragging on the ground, characterized in that the rolling means are a single roller (6), whose rotation axis is shorter than the width of the support base (2) for skis and lies substantially in the same plane as the element (5) on which it is pivoted, and the element on which the roller is pivoted is a flat element (5) in form of an inverted U, the roller (6) being pivoted between the two leg portions thereof.

2. The skicarrier according to claim 1, wherein said support provided with means capable of separately engaging and holding in a removable manner both the terminal portions of a pair of skis comprises: a rectangle-shaped base (2); a rigid partition plate (3) which extends upwards, integrally and perpendicularly to said base and along the whole medial longitudinal line thereof, and two spring plates (4) which extend integrally upwards from the corresponding longitudinal edges of said base.

3. The skicarrier according to claim 1, wherein said support provided with means capable of separately engaging and holding in a removable manner both the terminal portions of a pair of skis comprises: a rectangle-shaped base (2 ); a rigid partition plate (3) which extends upwards, integrally and perpendicularly to said base and along the whole medial longitudinal line thereof, each face of said rigid partition plate being provided with fastening belts (9); and two boards (8) which extend integrally upwards from the corresponding longitudinal edges of said base.

## Patentansprüche

1. Ski-Transportgerät zum Transportieren von Ski mit der Oberseite nach unten, das einen Träger mit einer Einrichtung, die auf lösbare Weise die beiden Endabschnitte eines Paars Ski getrennt aufnehmen und halten kann, umfaßt, sowie eine Rolleinrichtung, die an dem Träger drehbar gelagert ist, so daß sie manuell auf dem Boden entlang gezogen werden kann, dadurch gekennzeichnet, daß die Rolleinrichtung eine einzelne Rolle (6) ist, deren Drehachse kürzer ist als die Breite der Trägerbasis (2) für Ski und im wesentlichen in der gleichen Ebene liegt, wie das Element (5), an dem sie drehbar gelagert ist, und dadurch, daß das Element, an dem die Rolle drehbar gelagert ist, ein flaches Element (5) in Form eines umgekehrten U ist, wobei die Rolle (6) zwischen den beiden Schenkeln desselben drehbar gelagert ist.

2. Ski-Transportgerät nach Anspruch 1, wobei der Träger, der mit einer Einrichtung, die auf lösbare Weise die beiden Endabschnitte eines Paars Ski getrennt aufnehmen und halten kann, versehen ist, umfaßt: eine rechteckige Basis (2); eine starre Trennplatte (3), die mit der Basis aus einem Stück geformt ist, und sich von ihr senkrecht nach oben und entlang ihrer gesamten Längs-Mittellinie erstreckt sowie zwei Federplatten (4), die sich von den entsprechenden Längskanten der Basis aus einem Stück mit ihnen geformt nach oben erstrecken.

3. Ski-Transportgerät nach Anspruch 1, wobei der Träger, der mit einer Einrichtung, die auf lösbare Weise die beiden Endabschnitte eines Paars Ski getrennt aufnehmen und halten kann, versehen ist, umfaßt: eine rechteckige Basis (2); eine starre Trennplatte (3), die mit der Basis aus einem Stück geformt ist, und sich von ihr senkrecht nach oben und entlang ihrer gesamten Längs-Mittellinie erstreckt, wobei jede Seite der starren Trennplatte mit Befestigungsriemen (9) versehen ist; und zwei Platten (8), die sich von den entsprechenden Längskanten der Basis aus einem Stück mit ihnen geformt nach oben erstrecken.

## Revendications

1. Dispositif pour transporter des skis la face vers le bas, comprenant un support avec des moyens aptes à coopérer de façon séparée et à maintenir d'une manière amovible les deux portions terminales d'une paire de skis, et des moyens de roulement mis en pivotement sur le support permettant la traction manuelle sur le sol, caractérisé en ce que les moyens de roulement sont constitues par un rouleau unique (6) dont l'axe de rotation est plus court que la largeur de l'embase de support (2) pour les skis et se situe sensiblement dans le même point que l'élément (5) sur lequel il est mis en pivotement, et l'élément sur lequel le rouleau est mis en pivotement est un élément plat (5) sous forme d'un U inversé, le rouleau (6) étant mis en pivotement entre ces deux portions de jambe.

2. Dispositif pour transporter des skis selon la revendication 1, dans lequel le support muni de moyens aptes à coopérer de façon séparée et à maintenir d'une manière amovible les deux portions terminales d'une paire de skis comprend : une embase de forme rectangulaire (2) ; une plaque de séparation rigide (3) qui s'étend vers le haut d'une manière solidaire et perpendiculaire à l'embase et le long de la totalité de sa ligne longitudinale médiane, et deux plaques à ressorts (4) qui s'étendent solidairement vers le haut à partir des bords longitudinaux correspondants de l'embase.

3. Dispositif pour transporter des skis selon la revendication 1, dans lequel le support muni de moyens aptes à coopérer de façon séparée et à maintenir d'une manière amovible les deux portions terminales d'une paire de skis comprennent : une embase de forme rectangulaire (2) ; une plaque de séparation rigide (3) qui s'étend vers le haut, de façon solidaire et perpendiculaire à l'embase et le long de la totalité de sa ligne longitudinale médiane, chaque face de la plaque de séparation rigide étant munie de sangles de fixation (9) ; et deux planches (8) qui s'étendent solidairement vers le haut à partir des bords longitudinaux correspondants de l'embase.
